# EUROPEAN PATENT APPLICATION

(11) **EP 3 505 755 A1**
(43) Date of publication of application: **03.07.2019**
(21) Application number: 18150065.3
(22) Date of filing: 02.01.2018
(51) Int. Cl.: F03D 17/00, F03D 7/02

(54) **ACCURATE WIND TURBINE ROTOR SPEED MEASUREMENT**

(71) Applicant: Siemens Gamesa Renewable Energy A/S, 7330 Brande (DK)
(72) Inventor: Hawkins, Samuel H., 7100 Vejle (DK); Hoegh, Gustav, 7100 Vejle (DK)
(74) Representative: Aspacher, Karl-Georg

(57) **Abstract**

There is described an arrangement for determining actual rotor speed in a wind turbine, the wind turbine comprising a tower (1), a non-rotating upper part (3) supported by the tower (1), a rotor (4) having a rotor axis (4a), and a generator for generating electrical power. The arrangement comprises: (a) a first sensor unit (108, 208, 308) adapted to be arranged at the non-rotating upper part (3) of the wind turbine to detect a rotational speed (ωr) of the rotor (4), (b) a second sensor unit (120; 223, 228; 325) adapted to detect an angular roll speed (ωt) of the non-rotating upper part (3), and (c) a processing unit (130, 230, 330) adapted to determine the actual rotor speed (ωa) by subtracting the angular roll speed (ωt) detected by the second sensor unit from the rotational speed (ωr) detected by the first sensor unit (108) .

## Description

### Field of Invention

The present invention relates to the field of wind turbines, in particular to measurement of rotor speed in wind turbines. More specifically, the present invention relates to an arrangement for determining actual rotor speed in a wind turbine, a wind turbine comprising such an arrangement, and a method of determining actual rotor speed in a wind turbine.

### Art Background

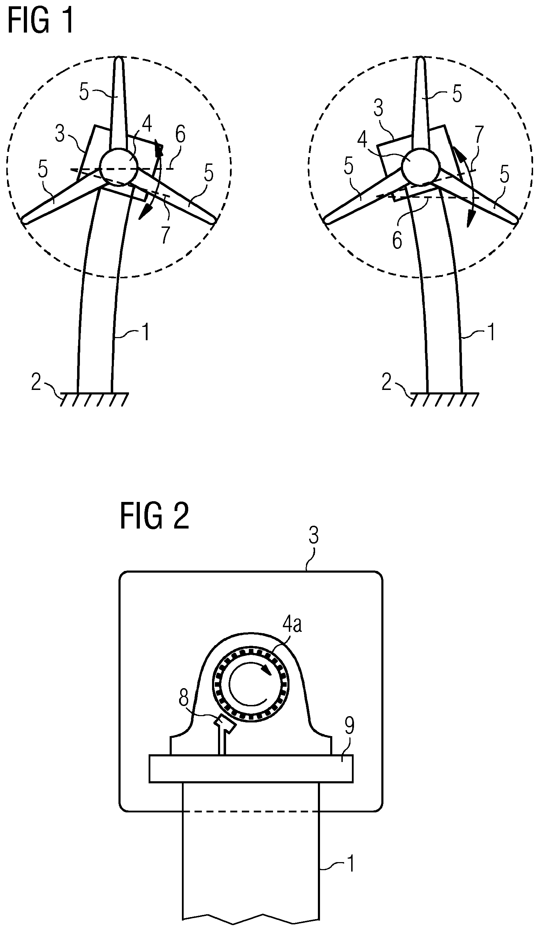

Modern wind turbines are built upon towers of ever increasing heights. For horizontal axis wind turbines, the rotating drivetrain of the wind turbine is located atop the tower. During operation, towers experience motion at their top which includes lateral motion as well as angular motion. This angular motion is comprised of pitch (fore-aft motion) and roll (side-to-side motion as shown in Figure 1).

The roll motion of the top of the tower as it sways side-to-side does not have a significant impact on the rotational speed of the turbine rotor from the frame of reference of the surrounding air and the ground; however, it can influence the speed measurements being made.

Referring to Figure 2, a common method of measuring rotor speed is to fix a rotor speed sensor 8 to a part of the non-rotating structure 3 of the turbine, and detect the motion of a rotating part 4a of the drive train, such as the main shaft or generator shaft. Since the fixed surface 9 where the rotor speed sensor 8 is mounted is also fixed to the tower top 3, then as the tower top 3 inclines side-to-side this sensor 8 has a rotational velocity aligned with the roll motion of the tower top.

This roll motion, therefore, impacts the measurement of the rotor speed by causing a cyclic oscillation in the relative angular velocity between the fixed sensor 8 and the rotating shaft 4a. This introduces an error in the rotor speed measurement relative to what would be observed from a truly fixed frame of reference (such as the ground, for example).

This rotor speed error can have real effects on the turbine. In response to perceived changes in rotor speed the turbine will pitch the rotor blades. Because the perceived changes are artificial then this excessive pitch activity induces additional loading on the pitch system itself and the turbine structure as the rotor torque and thrust fluctuates in response to the pitch changes. This reduces the lifetime of the turbine and its components and can result in increased operational costs.

This problem exists on both direct drive and geared turbines. For direct drive turbines the rotor speed measurement error occurs directly as described above. For geared turbines, where speed measurement takes place at the high speed shaft of the gearbox or generator, the cyclic oscillations in rotor speed error are transferred to the high speed shaft due to the gearbox casing being fixed to the turbine tower top.

As rotors become increasingly larger, and rotor speeds become slower, the error introduced by tower roll becomes more apparent.

One method for avoiding measurement errors due to tower roll is to use a rotor speed monitor positioned in the rotor which uses the earth's gravity as a fixed frame of reference, rather than the nacelle of the turbine. Such a concept is described in EP 1835293 A1.

However, the most common form of rotor speed sensor in wind turbines is the rotary encoder 8 mounted on a fixed part 9 of the nacelle as shown in Figure 2. Accordingly, there is a need for a solution for correcting the rotor speed error introduced by tower-top roll on wind turbines with the most common type of speed sensor.

### Summary of the Invention

This need may be met by the subject matter according to the independent claims. Advantageous embodiments of the present invention are described by the dependent claims.

#01#According to a first aspect of the invention, there is provided an arrangement for determining actual rotor speed in a wind turbine, the wind turbine comprising a tower, a non-rotating upper part supported by the tower, a rotor having a rotor axis, and a generator for generating electrical power. The arrangement comprises (a) a first sensor unit adapted to be arranged at the non-rotating upper part of the wind turbine to detect a rotational speed of the rotor, (b) a second sensor unit adapted to detect an angular roll speed of the non-rotating upper part, and (c) a processing unit adapted to determine the actual rotor speed by subtracting the angular roll speed detected by the second sensor unit from the rotational speed detected by the first sensor unit.

This aspect of the invention is based on the idea that the angular roll speed of the non-rotating upper part of the wind turbine is detected and subtracted from the rotational rotor speed detected by a customary (first) sensor arranged at the non-rotating upper part of the wind turbine. By removing the influence of the angular roll motion on the detected rotor speed, the actual rotor speed (i.e. the rotor speed relative to the frame of reference of the ground) can be determined with high precision. Thereby, unnecessary adjustments of blade pitch angle and corresponding unnecessary loading of the pitch system can be avoided.

The first sensor unit may preferably comprise a sensor, e.g. an optical sensor or a magnetic sensor, capable of detecting a predetermined pattern on the surface of the rotor axis.

The second sensor unit may preferably comprise one or more sensors and processing circuitry capable of providing signals related to angular roll movement of the non-rotating upper part of the wind turbine. The second sensor may rely on a variety of principles, sensors and processing, some of which will be described in more detail below in conjunction with exemplary embodiments.

#02#According to an embodiment of the invention, the second sensor unit comprises (a) a first accelerometer adapted to be arranged at an upper end of the tower to provide a first acceleration signal representative of a side-to-side acceleration of said upper end, and (b) an acceleration signal processing unit adapted to determine the angular roll speed based on a mathematical model of the tower and the first acceleration signal.

According to this embodiment, the side-to-side acceleration of the upper end of the tower (i.e. either at an upper part of the tower close to the non-rotating upper part of the wind turbine or at a lower part of said non-rotating upper part) is detected by the first accelerometer. The corresponding side-to-side movement is related to the angular roll speed and the latter can be determined by using a mathematical model describing the physical properties of the tower. Using such mathematical model, the acceleration signal processing unit determines the angular roll speed.

An accelerometer is a cheap and reliable sensor, which is already included in numerous wind turbine applications. The acceleration processing signal may preferably be implemented as software running on a suitable computer, which may already be present in a wind turbine or may be a dedicated device for this particular application. The mathematical model the tower movement behavior can be selected in consideration of model complexity needed precision and will include relevant physical parameters (e.g. tower height, tower stiffness, and tower-top mass) corresponding to the particular application.

#03#According to a further embodiment of the invention, the second sensor unit further comprises a second accelerometer adapted to be arranged at a midsection of the tower to provide a second acceleration signal representative of a side-to-side acceleration of said midsection, the midsection being located between a lower end and the upper end of the tower, wherein the acceleration signal processing unit is further adapted to determine the angular roll speed based on the second acceleration signal.

In other words, this embodiment relies on the side-to-side acceleration both at the tower top and at the midsection of the tower. Thereby, more complex vibration patterns or oscillations may be taken into account in the mathematical model.

#04#According to a further embodiment of the invention, the acceleration signal processing unit comprises at least one bandpass filter centered on a fundamental frequency of the tower.

More specifically, the fundamental frequency may denote an eigenfrequency of the tower or a frequency corresponding to a certain tower oscillation mode (i.e. a first mode, a second mode, etc.).

In embodiments comprising more than one accelerometer arranged in different positions, the acceleration signal processing unit may comprise a bandpass filter corresponding to each sensor position.

#05#According to a further embodiment of the invention, the mathematic model of the tower characterizes the tower as a cantilevered beam and provides a relation between side-to-side acceleration of the tower and a tower inclination angle.

#06#According to a further embodiment of the invention, the second sensor unit comprises (a) an inclinometer adapted to be arranged at the upper end of the tower to provide an inclination signal representative of an inclination angle of the tower, and (b) an inclination signal processing unit adapted to determine the angular roll speed based on the inclination signal.

In this embodiment, the inclination angle (i.e. the angle of tilt of the tower relative to a vertical reference) is detected (as a function of time) and processed by the inclination signal processing unit to determine the angular roll speed.

This embodiment requires less processing and modeling in comparison to the above accelerometer based embodiments, since the inclination angle is determined directly by the inclinometer without the need for complex mathematical modeling. Furthermore, complex tower vibrations (involving several modes) are automatically taken into account with only a single sensor (inclinometer) and without filtering and complex processing.

#07#According to a further embodiment of the invention, the inclination signal processing unit is adapted to determine the angular roll speed based on a time derivative of the inclination signal.

#08#According to a further embodiment of the invention, the second sensor unit comprises a gyroscopic sensor adapted to be arranged at the upper end of the tower to provide a gyroscopic signal indicative of the angular roll speed.

Using a gyroscopic sensor provides the advantage of being able to detect the angular roll speed directly without additional signal processing. Accordingly, the resulting signal representing the actual rotor speed may be less noisy in comparison to other embodiments.

#09#According to a further embodiment of the invention, the second sensor unit comprises (a) a generator frequency sensor adapted to provide a frequency signal representative of a frequency of electrical power generated by the generator, and (b) a generator frequency processing unit adapted to determine the angular roll speed based on the frequency signal.

This exemplary embodiment utilizes the fact, that the tower vibration induced angular roll will influence the frequency of the generated electrical power in exactly the same manner as it influences the rotor speed measured by the first sensor unit. Thus, by analyzing the frequency of the generated power, the vibration induced angular roll speed may be determined.

#10#According to a further embodiment of the invention, the generator frequency processing unit comprises at least one bandpass filter centered on a fundamental frequency of the tower.

#11#According to a second aspect of the invention, there is provided a wind turbine. The wind turbine comprises (a) a tower, (b) a non-rotating upper part supported by the tower, (c) a rotor having a rotor axis, (d) a generator for generating electrical power, and (e) an arrangement according to any of the preceding claims.

This aspect of the invention relates to a wind turbine fitted with an advantageous arrangement according to the first aspect (or one of the above described embodiments). Accordingly, the wind turbine is capable of obtaining very precise measurements of its rotor speed and thus to optimize pitch control. As a result, the wind turbine will be robust and less prone to wear as a result of excessive pitching operations.

#12#According to a third aspect of the invention, there is provided a method of determining actual rotor speed in a wind turbine, the wind turbine comprising a tower, a non-rotating upper part supported by the tower, a rotor having a rotor axis, and a generator for generating electrical power. The method comprises (a) detecting a rotational speed of the rotor, (b) detecting an angular roll speed of the non-rotating upper part, and (c) determining the actual rotor speed by subtracting the detected angular roll speed from the detected rotational speed.

This aspect of the invention is based on the same idea as the first aspect described above.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

### Brief Description of the Drawings

Figure 1 shows a schematic illustration of roll motion of an upper part of a wind turbine caused by tower sway.
Figure 2 shows a schematic illustration of an upper part of a wind turbine equipped with a rotor speed sensor.
Figure 3 shows an arrangement according to an exemplary embodiment of the present invention.
Figure 4 shows a schematic illustration of roll motion of an upper part of a wind turbine caused by 2^{nd} mode tower sway.
Figure 5 shows an arrangement according to a further exemplary embodiment of the present invention.
Figure 6 shows an arrangement according to a further exemplary embodiment of the present invention.

### Detailed Description

The illustration in the drawing is schematic. It is noted that in different figures, similar or identical elements are provided with the same reference numerals or with reference numerals which differ only within the first digit.

Figure 1 shows a schematic illustration of roll motion of an upper part of a wind turbine caused by tower sway or side-to-side movement. More specifically, Figure 1 shows a wind turbine comprising a tower 1 mounted to the ground 2, an upper non-rotating part 3 housing a rotor 4 with rotor blades 5. The left-hand part of Figure 1 shows a state where the tower 1 has swayed to the right and the right-hand part of Figure 1 shows a state where the tower 1 has swayed to the left. The dashed line 6 is horizontal and the dashed line 7 shows the plane of the bottom of the non-rotating upper part 3 (also referred to as a nacelle) of the wind turbine. As can be seen, the swaying movement of tower causes a corresponding angular roll movement of the upper part 3.

Figure 2 shows a schematic illustration of the upper part 3 of the wind turbine shown in Figure 1 equipped with a rotor speed sensor 8. The rotor speed sensor 8 is mounted on surface 9, which is fixed to the top of the tower 1. The rotor speed sensor 8 may e.g. be an optical sensor or a magnetic sensor, capable of detecting a predetermined pattern on the surface of the rotor axis 4a. Referring again to Fig. 1, it can be seen that the rolling motion of upper part 3 caused by the tower sway will influence the rotor speed detected by rotor speed sensor 8.

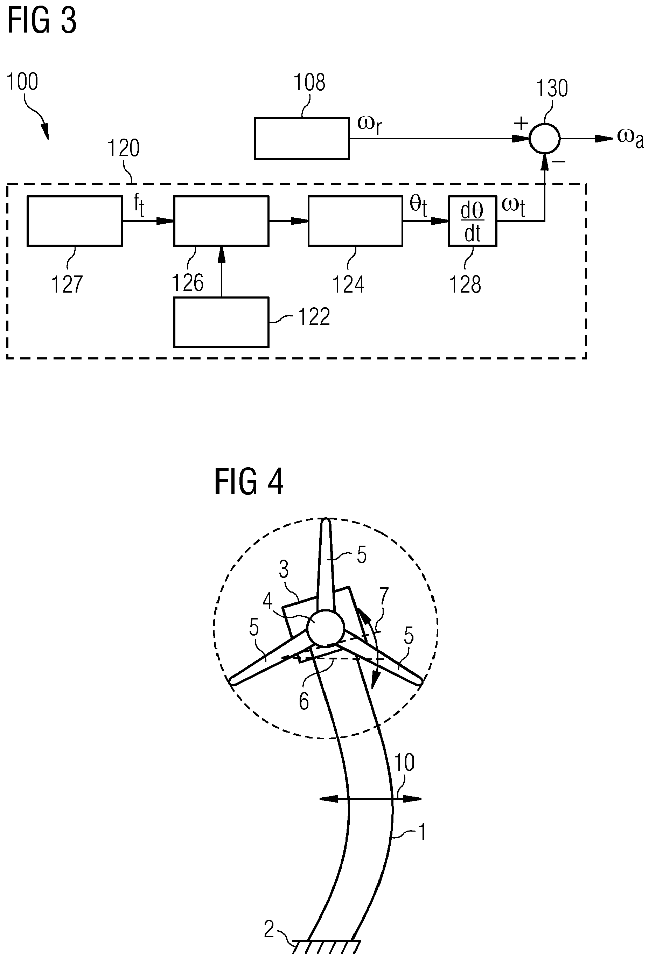

Figure 3 shows an arrangement 100 according to an exemplary embodiment of the present invention. More specifically, the arrangement 100 comprises a first sensor unit 108 (corresponding e.g. to the rotor speed sensor 8 shown in Figure 2) for detecting a rotational speed ωᵣ of the rotor 4, a second sensor unit 120 for detecting an angular roll speed ωₜ of the non-rotating upper part 3, and a processing unit 130 for determining the actual rotor speed ωₐ by subtracting the angular roll speed ωₜ detected by the second sensor unit 120 from the rotational speed ωᵣ detected by the first sensor unit 108.

The second sensor unit 120 comprises an accelerometer 122, a calculation unit 124, a bandpass filter 126, fundamental frequency data 127, and a differentiator 128. The accelerometer 122 is arranged at the upper part 3 of the wind turbine in order to detect a side-to-side acceleration of said upper part 3. The acceleration signal output by the accelerometer 122 is supplied to calculation unit 124 through the bandpass filter 126, which receives a value of a fundamental tower frequency fₜ from the fundamental frequency data 127 in accordance with a mathematical model representing the tower movement. The calculation unit 124 calculates a corresponding angular roll movement (inclination) θₜ by applying the mathematical model to the filtered acceleration signal. The differentiator calculates the angular roll speed θₜ as the time derivative of the angular roll movement θₜ and supplies it to the subtractor 130 which calculates the actual rotor speed ωa = ωᵣ - ωₜ.

Figure 4 shows a schematic illustration of roll motion of an upper part of a wind turbine caused by 2^{nd} mode tower sway. More specifically, Figure 4 shows that a midsection 10 of the tower 1 is moving from side to side, thereby causing roll motion of the upper part 3 of the wind turbine.

The swaying shown in Figure 4 may be taken into account by modifying the embodiment shown in Figure 3 and discussed above to include a further accelerometer (similar to accelerometer 122) arranged at the midsection 10 of tower 1 and a further bandpass filter (similar to bandpass filter 126) centered on the fundamental frequency corresponding to the 2^{nd} mode swaying shown in Figure 4.

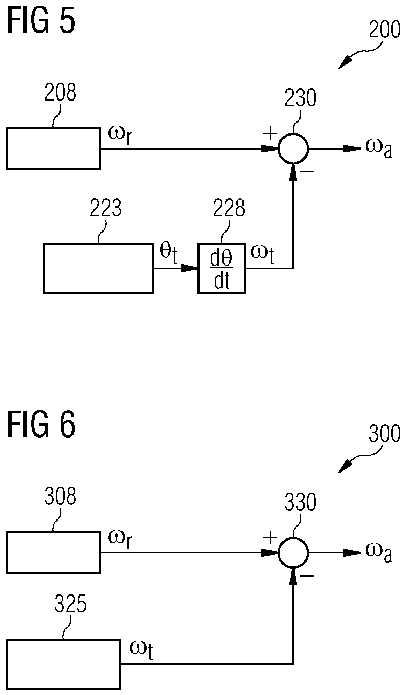

Figure 5 shows an arrangement 200 according to a further exemplary embodiment of the present invention. More specifically, the arrangement 200 comprises a first sensor unit 208 corresponding to first sensor unit 108 in Figure 3 and a subtractor 230 corresponding to subtractor 130 in Figure 3. Furthermore, the arrangement comprises an inclinometer 223 arranged at the upper end of tower 1 or at the non-rotating upper part 3 of the wind turbine. In both cases, the inclinometer is able to detect the inclination θₜ of the upper part 3 corresponding to angular roll movement. The differentiator is similar to differentiator 128 in Figure 3 and provides the angular roll speed ωₜ to the subtractor 230.

Figure 6 shows an arrangement 300 according to a further exemplary embodiment of the present invention. More specifically, the arrangement 300 comprises a first sensor unit 308 corresponding to first sensor units 108 and 208 in Figures 3 and 5 and a subtractor 330 corresponding to subtractors 130 and 230 in Figures 3 and 5. Furthermore, the arrangement 300 comprises a gyroscopic sensor 325 arranged at the top of tower 2 or within the non-rotating upper part 3 of the wind turbine in such a manner that it moves together with said upper part 3. The gyroscopic sensor 325 is capable of directly outputting the angular roll speed ωₜ to the subtractor 330.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

## Claims

1. An arrangement for determining actual rotor speed in a wind turbine, the wind turbine comprising a tower (1), a non-rotating upper part (3) supported by the tower (1), a rotor (4) having a rotor axis (4a), and a generator for generating electrical power, the arrangement comprising
a first sensor unit (108, 208, 308) adapted to be arranged at the non-rotating upper part (3) of the wind turbine to detect a rotational speed (ωᵣ) of the rotor (4),
a second sensor unit (120; 223, 228; 325) adapted to detect an angular roll speed (ωₜ) of the non-rotating upper part (3), and
a processing unit (130, 230, 330) adapted to determine the actual rotor speed (ωₐ) by subtracting the angular roll speed (ωₜ) detected by the second sensor unit from the rotational speed (ωᵣ) detected by the first sensor unit (108).

2. The arrangement according to the preceding claim, wherein the second sensor unit comprises
a first accelerometer (122) adapted to be arranged at an upper end of the tower (1) to provide a first acceleration signal representative of a side-to-side acceleration of said upper end, and
an acceleration signal processing unit (124, 126, 127, 128) adapted to determine the angular roll speed based on a mathematical model of the tower and the first acceleration signal.

3. The arrangement according to the preceding claim, wherein the second sensor unit further comprises a second accelerometer adapted to be arranged at a midsection (10) of the tower to provide a second acceleration signal representative of a side-to-side acceleration of said midsection (10), the midsection being located between a lower end and the upper end of the tower, wherein the acceleration signal processing unit is further adapted to determine the angular roll speed based on the second acceleration signal.

4. The arrangement according to claim 2 or 3, wherein the acceleration signal processing unit comprises at least one bandpass filter (126) centered on a fundamental frequency (ft) of the tower.

5. The arrangement according to any of claims 2 to 4, wherein the mathematic model of the tower characterizes the tower as a cantilevered beam and provides a relation between side-to-side acceleration of the tower and a tower inclination angle.

6. The arrangement according to claim 1, wherein the second sensor unit comprises
an inclinometer (223) adapted to be arranged at the upper end of the tower to provide an inclination signal representative of an inclination angle of the tower, and
an inclination signal processing unit (228) adapted to determine the angular roll speed based on the inclination signal.

7. The arrangement according to claim 6, wherein the inclination signal processing unit is adapted to determine the angular roll speed based on a time derivative of the inclination signal.

8. The arrangement according to claim 1, wherein the second sensor unit comprises a gyroscopic sensor (325) adapted to be arranged at the upper end of the tower to provide a gyroscopic signal indicative of the angular roll speed.

9. The arrangement according to claim 1, wherein the second sensor unit comprises
a generator frequency sensor adapted to provide a frequency signal representative of a frequency of electrical power generated by the generator, and
a generator frequency processing unit adapted to determine the angular roll speed based on the frequency signal.

10. The arrangement according to claim 9, wherein the generator frequency processing unit comprises at least one bandpass filter centered on a fundamental frequency of the tower.

11. A wind turbine comprising
a tower (1),
a non-rotating upper part (3) supported by the tower,
a rotor (4) having a rotor axis (4a),
a generator for generating electrical power, and
an arrangement (100, 200, 300) according to any of the preceding claims.

12. A method of determining actual rotor speed in a wind turbine, the wind turbine comprising a tower, a non-rotating upper part supported by the tower, a rotor having a rotor axis, and a generator for generating electrical power, the method comprising
detecting a rotational speed of the rotor,
detecting an angular roll speed of the non-rotating upper part, and
determining the actual rotor speed by subtracting the detected angular roll speed from the detected rotational speed.
